# EUROPÄISCHE PATENTSCHRIFT

(11) **EP 1 655 160 B1**
(45) Veröffentlichungstag und Bekanntmachung des Hinweises auf die Patenterteilung: **24.02.2010**
(21) Anmeldenummer: 05023636.3
(22) Anmeldetag: 28.10.2005
(51) Int. Cl.: B60H 1/34

(54) **Aufsteckbare Elemente für Kraftfahrzeugbelüftungsdüsen**
Pluggable elements for motor vehicle air vents
Eléments enfichables pour des buses d'aération de véhicule automobile

(30) Priorität: 06.11.2004 DE 102004053720
(43) Veröffentlichungstag der Anmeldung: 10.05.2006
(73) Patentinhaber: GM Global Technology Operations, Inc., Detroit, MI 48265-3000 (US)
(72) Erfinder: Lummitsch, Stefan, 65428 Rüsselsheim (DE); Marutschke, Andreas, 65428 Rüsselsheim (DE); Schenk, Holger, 65205 Wiesbaden (DE)
(74) Vertreter: Daniel, Ulrich W.P.

(56) Entgegenhaltungen:
- DE-U1- 20 307 030
- DE-U1-202004 008 181
- FR-A- 2 645 628

## Beschreibung

Die Erfindung bezieht sich auf einen Luftausströmer mit einem eine Luftaustrittsöffnung bildenden Düsengehäuse in dem zumindest eine Lamelle angeordnet ist, die einen ersten Bereich und einen sich daran anschließenden zweiten Bereich aufweist.

Derartige Luftausströmer werden zum Beispiel als Lamellenluftausströmer in Innenräumen von Kraftfahrzeugen installiert. Mittels der Lamellen wird die ausströmende Luft gerichtet. Dies geschieht derart, dass die Lamellen von einer ersten Endposition zu einer zweiten Endposition in dem Gehäuse beweglich gelagert sind. Damit die Lamellenluftausströmer ein stilistisch und ästhetisch ansprechendes Erscheinungsbild in dem Kraftfahrzeuginnenraum bilden, werden die Lamellen dekoriert. Eine Dekorierung erfolgt meist durch lackieren, oder, jedoch selten, durch die Verwendung von farblichen (pigmentierten) Materialien.

Als ein Hauptnachteil der bekannten Luftausströmer ist anzusehen, dass der Prozess der Lackierung aufgrund der notwendigen Lackieranlage sehr teuer ist. Zudem ist der Lackierprozess wegen Aufrechterhaltung eines vorgegebenen Qualitätsstandards, der ständig weiterentwickelt wird, sehr aufwendig.

Möglich ist, dass eine Designvorgabe eine teilweise Lackierung der Lamellen fordert, um so das Erscheinungsbild des Kraftfahrzeuginnenraumes aufzuwerten. Nachteilig ist hierbei, dass eine teilweise Lackierung nicht nur mit einem zusätzlichen technischen Aufwand erreichbar ist, sondern auch noch eine sehr hohe Ausschussrate aufgrund nicht erfüllter Qualitätsstandards zu erwarten ist, so dass betriebsbereite Luftausströmer bzw. Lamellen trotz einer möglichen Verwendung äußerst kostenintensiv entsorgt werden müssen. Dies gilt auch bei der Verwendung von pigmentiertem Material.

Als ein weiterer Nachteil ist anzusehen, dass eine Änderung der Farbe, oder ein Zufügen einer weiteren Farbe, mit einem sehr hohen Entwicklungs- und Kostenaufwand verbunden ist.

Aus der DE 203 07 030 U1 geht ein Schiebeelement für eine Luftdüse hervor, das aus zwei Hälften besteht und das durch eine sich im Wesentlichen über die Länge des Schiebeelements erstreckende Spange miteinander auf der Vorderseite verbunden sind.

Es ist Aufgabe der Erfindung, einen verbesserten Luftausströmer der eingangs genannten Art zu schaffen, der mit einfachen Mitteln flexibel an ein individuelles Erscheinungsbild des Fahrzeuginnenraumes anpassbar ist.

Erfindungsgemäß wird die Aufgabe dadurch gelöst, dass der Lamelle ein lösbares Element zugeordnet ist, welches kraftformschlüssig mit der Lamelle verbindbar ist, so dass der erste Bereich im aufgesteckten Zustand des lösbaren Elementes in Querrichtung der Lamelle gesehen zumindest teilweise abgedeckt ist.

Das lösbare Element ist U-förmig mit einem Basissteg und zwei U-Schenkeln ausgestaltet, an denen die Rastkanten, vorzugsweise aufeinander zu orientiert, angeordnet sind. Der Basissteg ist bevorzugt verrundet. Selbst-verständlich kann der Basissteg auch jede andere Ausgestaltung aufweisen, wobei dieser jedoch an die Ausgestaltung des ersten Bereiches angepasst sein sollte.

Mit dieser einfachen Lösung kann auf eine Aufwendige Lackieranlage verzichtet werden. Denn das lösbare Element wird einfach auf den ersten Bereich aufgesteckt, so dass dieser in Querrichtung der Lamelle gesehen die gesamte Lamelle oder einen Teil davon abdeckt. Damit entfällt ein kostenintensives Lackieren der Lamellen.

Damit das lösbare Element ein genügendes Widerlager an der Lamelle findet, ist zweckmäßig vorgesehen, dass ein Übergangsbereich von dem ersten Bereich zum zweiten Bereich als Absatz ausgebildet ist. Damit kann das lösbare Element den Absatz zur kraftformschlüssigen Verbindung mit der Lamelle hintergreifen. Der Absatz kann in Querrichtung der Lamelle gesehen selbstverständlich unterbrochen sein. Möglich ist aber auch, dass eine Nut in dem Übergangsbereich eingebracht ist, die natürlich ebenfalls unterbrochen sein kann.

Um den ersten Bereich zu hintergreifen, weist das lösbare Element zweckmäßig Rastkanten auf. Durch die Rastkanten wird die Öffnung des U-förmigen Elementes verringert. Damit das lösbare Element auf den ersten Bereich aufsteckbar ist, ist es zweckmäßig im Sinne der Erfindung, wenn das lösbare Element in der Art einer Federhülse ausgestaltet ist, so dass sich das lösbare Element bei dem Aufstecken auf die Lamelle durch leichten Druck auf den Basissteg öffnet und mit den Rastkanten relativ widerstandslos über den ersten Bereich gleitet. Wenn der erste Bereich überwunden ist, schnappen die Rastkanten hörbar hinter den Absatz, oder greifen hörbar in die Nut ein. Damit ist das lösbare Element kraftformschlüssig mit der Lamelle verbunden. Das lösbare Element deckt den ersten Bereich in Querrichtung der Lamelle gesehen vollflächig ab, kann aber in Querrichtung der Lamelle gesehen auch lediglich einen Teilbereich abdecken, so dass vorteilhaft vorgesehen werden kann, das lösbare Element in der Länge der Lamelle oder kürzer als diese auszubilden. Auf jeden Fall ist somit nur ein Teilbereich der Lamelle, nämlich der erste Bereich abgedeckt.

Mittels des lösbaren Elementes kann auf eine Lackierung der Lamellen verzichtet werden. Zweckmäßig im Sinne der Erfindung ist daher, wenn das lösbare Element ein lackiertes Spritzgussteil ist. An die Lackierung des lösbaren Elementes werden ebenfalls die geforderten Qualitätsstandards gestellt, die aber zum großen Teil erreichbar sind, so dass geringere Ausschussraten erreicht werden. Obwohl das lösbare Element lackiert ist, ist dies in Hinsicht auf möglichen Ausschuss vorteilhaft, denn das lösbare Element ist äußerst preiswert in der Herstellung, so dass bei einem nicht erreichten Qualitätsstandard lediglich dieses entsorgt werden muß und nicht die relativ kostenintensiv hergestellte Lamelle oder gar der gesamte Luftausströmer. Dadurch, dass nur das lösbare Element lackiert ist, und nicht die gesamte Lamelle wird zudem ein erheblicher Anteil an Lack eingespart.

Denkbar ist aber auch, dass das lösbare Element ein aus einem farbigen Kunststoff hergestelltes Spritzgussteil ist, so dass eine Lackierung gänzlich entfallen kann. Günstig im Sinne der Erfindung kann aber auch vorgesehen sein, dass das lösbare Element ein folienhinterspritztes Bauteil ist oder aus einem Metall, vorzugsweise aus Aluminium hergestellt ist.

Aufgrund dieser einfachen Ausgestaltung wirkt eine glatte farbliche Trennung der Lamelle und dem lösbaren Element visuell äußerst ansprechend auf die Kraftfahrzeuginsassen. Zudem wird eine erhebliche Flexibilität hinsichtlich von Änderungen oder zusätzlichen Dekorvarianten erreicht, da lediglich das lösbare Element in seinem Design geändert werden muß. Da das lösbare Element mit wenigen Handgriffen in einfachster Weise von der Lamelle lösbar ist, kann dieses äußerst leicht von dem Kraftfahrzeugbenutzer demontiert und durch ein in anderer Weise dekoriertes Element ausgetauscht werden.

Es versteht sich, dass die vorstehend genannten und nachstehend noch zu erläuternden Merkmale nicht nur in der jeweils angegebenen Kombination, sondern auch in anderen Kombinationen verwendbar sind.

Die Erfindung wird im Folgenden anhand eines Ausführungsbeispieles unter Bezugnahme auf die zugehörigen Zeichnungen näher erläutert. Es zeigen:
- Fig. 1: einen Luftausströmer in einer perspektivischen Gesamtansicht,
- Fig. 2: eine einzelne Lamelle mit einem zugeordneten lösbaren Element,
- Fig. 3: die Lamelle aus Figur 2 mit aufgestecktem lösbaren Element.

In den unterschiedlichen Figuren sind gleiche Teile stets mit denselben Bezugszeichen versehen, weswegen diese in der Regel nur einmal beschrieben sind.

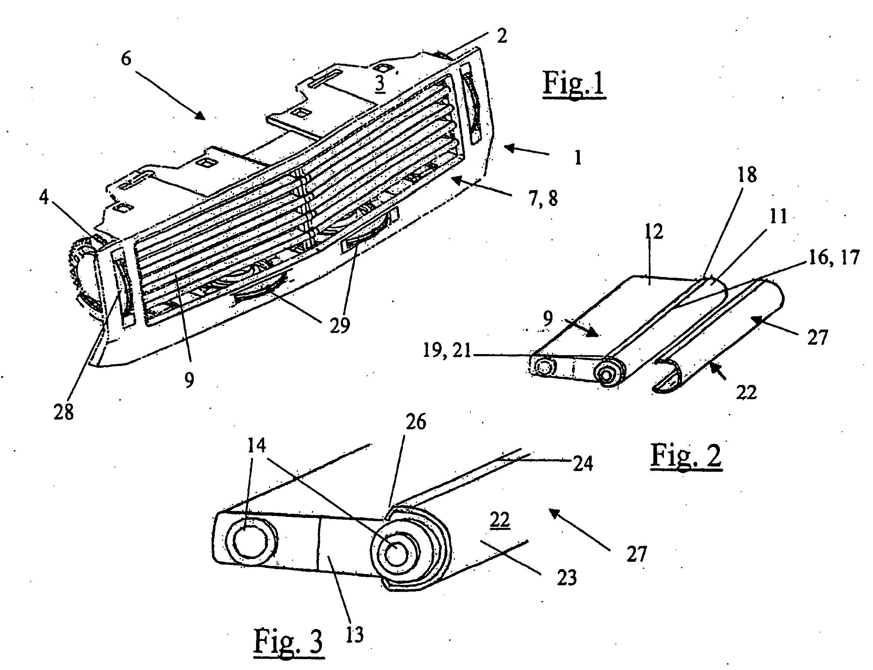

Figur 1 zeigt einen Luftausströmer 1, der geeignet ist vorzugsweise einen Kraftfahrzeuginnenraum zu belüften. Der Luftausströmer 1 weist ein Düsengehäuse 2 mit Längsseitenwandungen 3 und Hochseitenwandungen 4 auf. Das Düsengehäuse 2 wird mit einer Anschlussseite 6 an einen nicht dargestellten Lüftungskanal angeschlossen. An der zur Anschlussseite 6 gegenüberliegenden Ausströmseite 7 wird eine Luftaustrittsöffnung 8 gebildet. Das Düsengehäuse 2 ist in dem dargestellten Ausführungsbeispiel mittels einer nicht sichtbaren Trennwand etwa in seiner Mitte geteilt, so dass zwei Kammern gebildet sind. Der in Figur 1 dargestellte Luftausströmer 1 ist vorzugsweise in der Mitte eines Armaturenbretts montierbar.

An der Ausströmseite 7 sind Lamellen 9 angeordnet. In dem bevorzugten Ausführungsbeispiel nach Figur 1 sind vier Lamellen 9 pro Kammer vorgesehen. Es können selbstverständlich auch mehr oder weniger Lamellen 9 als in dem Ausführungsbeispiel gezeigt an der Anschlussseite angeordnet sein. Die Lamellen 9 erstrecken sich parallel zueinander von einer jeweiligen Hochseitenwandung 4 zur Trennwand.

Die Lamellen 9 weisen einen ersten Bereich 11 und einen sich daran anschließenden zweiten Bereich 12 auf. Der erste Bereich 11 ist an der Ausströmseite 7 angeordnet, wobei der zweite Bereich 12 zur Anschlussseite 8 gerichtet ist. Die Lamelle 9 ist einstückig hergestellt. Möglich ist, mittels geeigneter Verbindungsmethoden, z.B. mittels Kleben oder Schweißen die Verbindung der zwei Bereiche 11 und 12 aneinander herzustellen.

Der zweite Bereich 12 ist im wesentlichen rechteckig ausgestaltet, wobei der erste Bereich 11 abgerundet ist (Figur 2). Der erste Bereich 11 ist etwas dicker ausgestaltet als der zweite Bereich 12. An einer Stirnseite 13 der beiden Bereiche 11 bzw. 12 sind Lagerzapfen 14 zur schwenkbaren Betätigung der Lamelle 9 angeordnet.

In einem Übergangsbereich 16 von dem ersten Bereich 11 zum zweiten Bereich 12 ist ein Absatz 17 angeordnet. Der Absatz 17 kann durch die dickere Ausgestaltung des ersten Bereiches 11 selbst gebildet sein, oder während der Herstellung der Lamelle 9 mit gebildet werden. In dem dargestellten Ausführungsbeispiel weist der Absatz 17 einen parallel zum zweiten Bereich 12 verlaufenden Steg 18 auf, der in einen Schrägsteg 19 übergeht. Der Schrägsteg 19 ist in Richtung zum zweiten Bereich 12 geneigt, so dass eine plane Anlagefläche 21 gebildet ist. Der Absatz 17 erstreckt sich in Querrichtung der Lamelle 9 gesehen über die gesamte Länge der Lamelle 9, kann aber auch unterbrochen sein. In dem Übergangsbereich 16 kann aber auch eine Nut eingebracht sein, die sich ebenfalls in Querrichtung der Lamelle 9 gesehen über die gesamte Länge der Lamelle 9 erstrecken oder unterbrochen sein kann.

Dem erste Bereich 11 ist ein lösbares Element 22 zugeordnet, welches ein Dekorelement ist. Das lösbare Element 22 ist U-förmig mit einem verrundeten Basissteg 23 und zwei U-Schenkeln 24 ausgestaltet. Der Basissteg 23 ist mit seiner rundlichen Ausgestaltung an den ersten Bereich 11 angepasst. Die U-Schenkel 24 sind entsprechend dem Steg 18 des Absatzes 17 ausgebildet.

An den U-Schenkeln 24 sind Rastkanten 26 angeordnet. Die Rastkanten 26 sind mit einer dem Schrägsteg 19 entsprechenden Neigung aufeinander zu orientiert. Mittels der Rastkanten 26 wird eine Öffnung des U-förmigen Elementes 22 verringert. Das lösbare Element 22 ist vorteilhaft in der Art einer Federhülse ausgestaltet, so dass sich dieses durch leichten Druck auf den Basissteg 23 auf den ersten Bereich 11 der Lamelle 9 stecken lässt. Bei dem Aufstecken weichen die U-Schenkel 24 aus, so dass die Rastkanten 26 nach überwinden des ersten Bereiches 11 hörbar hinter den Absatz 17 schnappen. Im Aufgesteckten Zustand liegen die Rastkanten 26 mit ihrer zur Anlagefläche 21 korrespondierenden geneigten Fläche an der Anlagefläche 21 an, so dass das lösbare Element 22 kraftformschlüssig mit dem ersten Bereich 11 verbunden ist (Figur 3).

Das lösbare Element 22 weist in dem dargestellten Ausführungsbeispiel die gleiche Länge auf wie die Lamelle 9, kann aber auch kürzer als diese sein. Vorzugsweise ist das lösbare Element 22 ein lackiertes Spritzgussteil.

Wie in Figur 3 deutlich zu sehen ist, ist der erste Bereich 11 der Lamelle 9 von dem lösbaren Element 22 vollflächig abgedeckt, so dass eine Lackierung der Lamelle 9 entfallen kann.

Das lösbare Element 22 ist mit einfachen Handgriffen von der Lamelle 9 entfernbar, so dass ein Kraftfahrzeugnutzer flexibel eine individuelle Gestaltung der Lamellen 9 mit unterschiedlich dekorierten Elementen 22 erreichen kann. Selbstverständlich können die lösbaren Elemente 22 an ihrer Sichtseite 27 auch unterschiedlich dekoriert sein. Denkbar ist beispielsweise, an der Sichtseite 27 unterschiedliche Farben oder einen dünnen, eleganten Strich vorzusehen.

Zur Neigungsverstellung der Lamellen 9 sind übliche Bedienelemente 28 an dem Düsengehäuse 2 vorgesehen. Zur Einstellung von Luftleitelementen, die senkrecht zu den Lamellen 9 innerhalb der Kammern angeordnet sind, dienen Bedienelemente 29.

Die Erfindung ist nicht auf eine Verwendung des lösbaren Elementes 22 an den Lamellen 9 des dargestellten Luftausströmers 1 beschränkt. Selbstverständlich kann das lösbare Element 22 an jedem zu dekorierenden Teil eingesetzt werden.

### Bezugszeichenliste

- 1.: Luftausströmer
- 2.: Düsengehäuse
- 3.: Längsseitenwandung
- 4.: Hochseitenwandung
- 5.:
- 6.: Anschlussseite
- 7.: Ausströmseite
- 8.: Luftaustrittsöffnung
- 9.: Lamellen
- 10.:
- 11.: erster Bereich v. 9
- 12.: zweiter Bereich v.9
- 13.: Stirnseite
- 14.: Lagerzapfen
- 15.: 16. Übergangsbereich
- 17.: Absatz
- 18.: Steg v. 17
- 19.: Schrägsteg v. 17
- 20.:
- 21.: Anlagefläche
- 22.: lösbares Element
- 23.: Basissteg v. 22
- 24.: U-Schenkel v. 22
- 25.:
- 26.: Rastkanten
- 27.: Sichtseite
- 28.: Bedienelemente
- 29.: Bedienelemente

## Patentansprüche

1. Luftausströmer mit einem eine Luftaustrittsöffnung (8) bildenden Düsengehäuse (2) in dem zumindest eine Lamelle (9) angeordnet ist, die einen ersten Bereich (11) und einen sich daran anschließenden zweiten Bereich (12) aufweist,
**dadurch gekennzeichnet, dass**
der Lamelle (9) ein lösbares Element (22) zugeordnet ist, welches kraftformschlüssig mit der Lamelle (9) verbindbar ist, so dass der erste Bereich (11) im aufgesteckten Zustand des lösbaren Elementes (22) in Querrichtung der Lamelle(9) gesehen zumindest teilweise abgedeckt ist, wobei das lösbare Element (22) U-förmig mit einem Basissteg (23) und zwei U-Schenkeln (24) ausgestaltet ist.

2. Luftausströmer nach Anspruch 1, **dadurch gekennzeichnet, dass** ein Übergangsbereich (16) von dem ersten Bereich (11) zum zweiten Bereich (12) als Absatz (17) ausgebildet ist.

3. Luftausströmer nach Anspruch 1 oder 2, **dadurch gekennzeichnet, dass** ein Übergangsbereich (16) von dem ersten Bereich (11) zum zweiten Bereich (12) als Absatz ausgebildet ist, der in Querrichtung der Lamelle (9) gesehen unterbrochen ist.

4. Luftausströmer nach einem der vorhergehenden Ansprüche, **dadurch gekennzeichnet, dass** das lösbare Element (22) Rastkanten (26) aufweist.

5. Luftausströmer nach einem der vorhergehenden Ansprüche, **dadurch gekennzeichnet, dass** das lösbare Element (22) in etwa die Länge der Lamelle (9) aufweist.

6. Luftausströmer nach einem der vorhergehenden Ansprüche, **dadurch gekennzeichnet, dass** das lösbare Element (22) kürzer als die Lamelle (9) ist.

7. Luftausströmer nach einem der vorhergehenden Ansprüche, **dadurch gekennzeichnet, dass** das lösbare Element (22) ein lackiertes Spritzgussteil ist.

8. Luftausströmer nach einem der vorhergehenden Ansprüche, **dadurch gekennzeichnet, dass** das lösbare Element (22) ein aus einem farbigen Kunststoff hergestelltes Spritzgussteil ist.

9. Luftausströmer nach einem der vorhergehenden Ansprüche, **dadurch gekennzeichnet, dass** das lösbare Element (22) ein folienhinterspritztes Bauteil ist.

10. Luftausströmer nach einem der Ansprüche 1 bis 6, **dadurch gekennzeichnet, dass** das lösbare Element (22) aus einem Metall, vorzugsweise aus Aluminium besteht.

## Claims

1. An air vent, comprising a nozzle housing (2) forming an air outlet opening (8), in which at least one lamella (9) is arranged which comprises a first region (11) and a second region (12) adjacent thereto, **characterized in that** the lamella (9) is associated with a detachable element (22) which is connectable in a frictionally locking fashion with the lamella (9), so that the first region (11), in the plugged state of the detachable element (22), is covered at least partly as seen in the transversal direction of the lamella (9), with the detachable element (22) being arranged in the manner of a U with a basic web (23) and two U-legs (24).

2. An air vent according to claim 1, **characterized in that** a transitional region (16) from the first region (11) to the second region (12) is arranged as a shoulder (17).

3. An air vent according to claim 1 or 2, **characterized in that** a transitional region (16) from the first region (11) to the second region (12) is arranged as a shoulder which is interrupted as seen in the transversal direction of the lamella (9).

4. An air vent according to one of the preceding claims, **characterized in that** the detachable element (22) comprises latching edges (26).

5. An air vent according to one of the preceding claims, **characterized in that** the detachable element (22) approximately has the length of the lamella (9).

6. An air vent according to one of the preceding claims, **characterized in that** the detachable element (22) is shorter than the lamella (9).

7. An air vent according to one of the preceding claims, **characterized in that** the detachable element (22) is a lacquered injection-molded part.

8. An air vent according to one of the preceding claims, **characterized in that** the detachable element (22) is an injection-molded part made of a colored plastic.

9. An air vent according to one of the preceding claims, **characterized in that** the detachable element (22) is a film back-molded component.

10. An air vent according to one of the claims 1 to 6,
**characterized in that** the detachable element (22) consists of a metal, preferably aluminum.

## Revendications

1. Diffuseur d'air avec un corps de buse (2) formant une ouverture de sortie d'air (8) dans lequel est disposée au moins une lamelle (9) qui présente une première zone (11) et une deuxième zone (12) suivant celle-ci, **caractérisé en ce que** la lamelle (9) est associée à un élément amovible (22) qui peut être assemblé par friction et engagement positif avec la lamelle (9) de telle façon que la première zone (11) est au moins partiellement recouverte quand l'élément amovible (22) est assemblé, vu dans le sens transversal de la lamelle (9), l'élément amovible (22) étant en forme de U avec une barre de base (23) et deux bras de U (24).

2. Diffuseur d'air selon la revendication 1, **caractérisé en ce qu'**une zone de transition (16) entre la première zone (11) et la deuxième zone (12) est réalisée sous la forme d'un épaulement (17).

3. Diffuseur d'air selon la revendication 1 ou 2, **caractérisé en ce qu'**une zone de transition (16) entre la première zone (11) et la deuxième zone (12) est réalisée sous la forme d'un épaulement qui est interrompu dans le sens transversal de la lamelle (9).

4. Diffuseur d'air selon l'une des revendications précédentes, **caractérisé en ce que** l'élément amovible (22) présente des bords d'emboîtement (26).

5. Diffuseur d'air selon l'une des revendications précédentes, **caractérisé en ce que** l'élément amovible (22) a approximativement la longueur de la lamelle (9).

6. Diffuseur d'air selon l'une des revendications précédentes, **caractérisé en ce que** l'élément amovible (22) est plus court que la lamelle (9).

7. Diffuseur d'air selon l'une des revendications précédentes, **caractérisé en ce que** l'élément amovible (22) est une pièce moulée par injection et peinte.

8. Diffuseur d'air selon l'une des revendications précédentes, **caractérisé en ce que** l'élément amovible (22) est une pièce faite d'une matière plastique colorée moulée par injection.

9. Diffuseur d'air selon l'une des revendications précédentes, **caractérisé en ce que** l'élément amovible (22) est une pièce moulée par injection sur film.

10. Diffuseur d'air selon l'une des revendications 1 à 6, **caractérisé en ce que** l'élément amovible (22) se compose d'un métal, de préférence d'aluminium.
